(19) Europäisches Patentamt
European Patent Office
Office européen des brevets

(11) **EP 2 698 606 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
**G01C 21/32** *(2006.01)* **G01C 21/30** *(2006.01)*
**G07B 15/06** *(2011.01)*

(21) Anmeldenummer: **12180293.8**

(22) Anmeldetag: **13.08.2012**

(54) **Verfahren zum Aktualisieren einer digitalen Straßenkarte**

Method for updating a digital street map

Procédé destiné à actualiser une carte routière numérique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2014 Patentblatt 2014/08**

(73) Patentinhaber: **Kapsch TrafficCom AG**
**1120 Wien (AT)**

(72) Erfinder:
• **Tijink, Jasja**
**2384 Breitenfurt (AT)**
• **Scheider, Thomas**
**2201 Gerasdorf (AT)**
• **Weimann, Franz**
**5600 St. Johann im Pongau (AT)**
• **Schrödl, Sören**
**2340 Mödling (AT)**

(74) Vertreter: **Weiser, Andreas**
**Patentanwalt**
**Kopfgasse 7**
**1130 Wien (AT)**

(56) Entgegenhaltungen:
**WO-A1-2007/065725 WO-A1-2010/129192**
**DE-A1- 10 030 932**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Aktualisieren einer ein Straßennetz repräsentierenden digitalen Straßenkarte, in der Straßensegmente mit Segmentlängen gespeichert sind.

Digitale Straßenkarten werden beispielsweise in Straßenmautsystemen benötigt, welche auf einem Kartenabgleichverfahren ("Map-Matching") beruhen. Bei solchen Systemen führen die Fahrzeuge Onboard-Units (OBUs) mit, welche jeweils fortlaufend Messwerte ihrer eigenen Position erzeugen, um diese mit der digitalen Straßenkarte zu vergleichen und die jeweils nächstliegenden Straßensegmente als befahren zu ermitteln. Die Segmentlängen der befahrenen Straßensegmente werden anschließend aufsummiert, um die Länge des vom Fahrzeug zurückgelegten Wegs zu berechnen und anschließend vermauten zu können.

Zur Erzeugung der Positionsmesswerte lokalisiert sich eine OBU beispielsweise in einem Satellitennavigationssystem (global navigation satellite system, GNSS) oder in einem terrestrischen Mobilfunknetz mit mehreren ortsfesten Sendeempfängern. Je nach Bauart sendet die OBU entweder die Positionsmesswerte an eine Zentrale des Straßenmautsystems, wo das Map-Matching erfolgt ("thin-client-OBU"), oder die digitale Straßenkarte ist in der OBU selbst abgelegt, welche das Map-Matching selbst durchführt ("thick-client-OBU").

Die Offenlegungsschrift DE 100 30 932 A1 offenbart ein Verfahren zur Erzeugung, Prüfung, Ergänzung und/oder Aktualisierung von Straßenkartendaten. Während der Fahrt eines Fahrzeugs wird die aktuelle Position erfaßt und gespeichert. Vorzugsweise werden Positionsmessungen mehrerer Fahrzeuge zusammengeführt und einer statistischen Auswertung unterzogen.

Map-Matching-Verfahren haben den Nachteil, dass die Genauigkeit der Weglängenermittlung durch die Segmentauflösung der digitalen Straßenkarte beschränkt ist. Die Längen der von einem Fahrzeug tatsächlich zurückgelegten Wege weichen häufig von den Längen der digital modellierten Straßensegmente ab: So ist beispielsweise im Bereich von Kurven, Kreuzungen oder Kreisverkehren der tatsächlich befahrene Weg abhängig von der Fahrtrichtung des Fahrzeugs, während die Segmentlängen der digitalen Straßenkarte in der Regel davon unabhängig modelliert sind. Auch Baustellen, temporäre Umleitungen usw. verursachen Fehler in den durch Map-Matching bestimmten Weglängen der Fahrzeuge.

Die Erfindung beruht auf der neuen Erkenntnis, dass es wünschenswert wäre, die digitale Straßenkarte eines Map-Matching-Verfahrens adaptiv an vorübergehende Änderungen des Straßennetzes oder bestimmte Fahrgewohnheiten der Benutzer anpassen zu können.

Die Erfindung schafft dazu ein Verfahren zum Aktualisieren einer ein Straßennetz repräsentierenden digitalen Straßenkarte, in der Straßensegmente mit Segmentlängen gespeichert sind, umfassend:

Ausstatten zumindest zweier sich im Straßennetz bewegender Fahrzeuge mit jeweils zumindest einer Positionsmesswerte erzeugenden Onboard-Unit;

wenn ein erster Satz von Positionsmesswerten einer ersten Onboard-Unit zu einem Straßensegment der digitalen Straßenkarte zuordenbar ist, Ermitteln einer ersten Weglänge aus den gegenseitigen Abständen aufeinanderfolgender Positionsmesswerte des ersten Satzes plus den Abständen des ersten und letzten Positionsmesswerts des ersten Satzes zur jeweils benachbarten Segmentgrenze;

wenn ein zweiter Satz von Positionsmesswerten einer zweiten Onboard-Unit zu demselben Straßensegment zuordenbar ist, Ermitteln einer zweiten Weglänge aus den gegenseitigen Abständen aufeinanderfolgender Positionsmesswerte des zweiten Satzes plus den Abständen des ersten und letzten Positionsmesswerts des zweiten Satzes zur jeweils benachbarten Segmentgrenze;

Berechnen einer durchschnittlichen Weglänge für das genannte Straßensegment aus zumindest der ersten und der zweiten Weglänge; und

wenn die berechnete durchschnittliche Weglänge von der gespeicherten Segmentlänge des genannten Straßensegments mindestens um ein vorgegebenes Mindestmaß und/oder höchstens um ein vorgegebenes Höchstmaß abweicht, Speichern der durchschnittlichen Weglänge als aktualisierte gespeicherte Segmentlänge dieses Straßensegments in der digitalen Straßenkarte.

Auf diese Weise wird die digitale Straßenkarte dynamisch an lokale Abweichungen, auch vorübergehender Natur durch z.B. Baustellen, Umleitungen usw., angepasst, und zwar auf Grundlage von gemittelten Weglängen-Meldungen von Fahrzeugen, die mit Hilfe ihrer Onboard-Units die Segmente vor Ort vermessen. Ferner werden Messfehler an den Segmentgrenzen aufgrund von zu spärlichen bzw. schütteren Positionsmesswerten minimiert.

Die berichtigten, aktualisierten Segmentlängen können anschließend von denselben - oder auch anderen - Fahrzeugen wiederum für das Map-Matching verwendet werden, um befahrende Straßensegmente und deren Längen bestimmen und daraus z.B. eine wegabhängige Straßenmaut berechnen zu können. Gemäß einer ersten bevorzugten Variante des Verfahrens wird dazu die vom ersten oder zweiten Fahrzeug zurückgelegte Weglänge aus zumindest der aktualisierten gespeicherten Segmentlänge ermittelt; gemäß einer alternativen Variante des Verfahrens wird vorgesehen, dass, wenn Positionsmesswerte einer dritten Onboard-Unit eines dritten Fahrzeugs zum genannten Straßensegment zuordenbar sind, die vom dritten Fahrzeug zurückgelegte Weglänge aus zumindest der aktualisierten gespeicherten Segmentlänge ermittelt wird.

Bevorzugt werden die Positionsmesswerte von den Onboard-Units an eine Zentrale gesendet, in welcher die digitale Straßenkarte gespeichert und aktualisiert wird. In der Zentrale kann auch gleich das Map-Matching erfolgen, oder die digitale Straßenkarte wird für dezentrale Map-Matching-Vorgänge an thick-client-OBUs verteilt. Die genannte Zentrale kann selbst die Abrechnungszentrale eines Straßenmautsystems sein oder lediglich ein dieser vorgeordneter Map-Matching-Proxy, welcher für das Map-Matching von Positionsmesswerten von thin-client-OBUs gewidmet ist.

In einer weiteren bevorzugten Ausgestaltung der Erfindung erfolgt das Zuordnen des ersten und des zweiten Satzes zu dem Straßensegment durch Auffinden des jeweils nächstliegenden Straßensegments. Das nächstliegende Straßensegment kann beispielsweise jenes sein, zu welchem die Positionsmesswerte jeweils den geringsten Normalabstand haben.

Alternativ kann die digitale Straßenkarte für unterschiedliche Fahrtrichtungen auf einer Straße jeweils ein gesondertes Straßensegment enthalten und das Zuordnen durch Auffinden des jeweils nächstliegenden Straßensegments mit derselben Fahrtrichtung erfolgen. Gerade bei Straßensegmenten mit Kurven kann sich eine je nach Fahrtrichtung stark unterschiedliche Segmentlänge ergeben, welche auf diese Weise automatisch vermessen und beim Map-Matching berücksichtigt werden kann.

In einer vorteilhaften Variante der Erfindung werden die gegenseitigen Abstände aus den Positionsmesswerten selbst ermittelt. In einer alternativen Variante erzeugt die Onboard-Unit für jeden Positionsmesswert ein zugehöriges Paar von Geschwindigkeit und Messzeitpunkt, und die gegenseitigen Abstände jeweils zweier aufeinanderfolgender Positionsmesswerte werden aus der Geschwindigkeit am ersten der beiden Positionsmesswerte und der Differenz der Messzeitpunkte der beiden Positionsmesswerte ermittelt. Da gerade in Satellitennavigationsempfängern besonders präzise Werte für Geschwindigkeit und Zeit erzeugt werden, ermöglicht letztere Variante eine besonders genaue Ermittlung der Abstände aufeinanderfolgender Positionsmesswerte.

Eine weitere bevorzugte Ausführungsform der Erfindung zeichnet sich dadurch aus, dass die Onboard-Units für jeden Positionsmesswert auch ein zugehöriges Positionsqualitätsmaß erzeugen, und dass für das Ermitteln einer Weglänge nur jene Positionsmesswerte verwendet werden, deren Positionsqualitätsmaß einen vorgegebenen ersten Schwellwert überschreitet. Dadurch können "Ausreißer"-Messwerte unterdrückt werden; eine Aktualisierung der digitalen Straßenkarte wird nur auf Grundlage von "guten" Positionsmesswerten durchgeführt.

In weiterer Ausgestaltung der Erfindung kann auch vorgesehen werden, dass anhand der Anzahl oder der Positionsqualitätsmaße der einem Straßensegment zuordenbaren Positionsmesswerte einer Onboard-Unit ein Satzqualitätsmaß gebildet wird, und dass aus diesen Positionsmesswerten nur dann eine Weglänge ermittelt oder für die Berechnung der durchschnittlichen Weglänge verwendet wird, wenn das Satzqualitätsmaß einen vorgegebenen zweiten Schwellwert überschreitet. Dadurch wird ein zusätzliches, zweites Qualitätskriterium für die Verwendung von Messwerten einer Onboard-Unit errichtet: Nur wenn ein ganzer Satz von Positionsmesswerten ein gemeinsames Qualitätsmaß (Satzqualitätsmaß) erfüllt, werden diese für die Berechnung der Weglänge herangezogen und können in die Berechnung der durchschnittlichen Weglänge als Grundlage für die Aktualisierung der digitalen Straßenkarte eingehen.

In einer vorteilhaften Ausführungsform der Erfindung wird das Satzqualitätsmaß aus den Positionsqualitätsmaßen des Satzes als Durchschnitt derselben ermittelt. So findet das Positionsqualitätsmaß jedes der im Satz berücksichtigten Positionsmesswerte Eingang in das Satzqualitätsmaß. Alternativ dazu kann das Satzqualitätsmaß als Verhältnis der Anzahlen von im Satz berücksichtigten Positionsmesswerten zur Summe aus berücksichtigten plus nicht-berücksichtigten Positionsmesswerten ermittelt werden. Dadurch werden indirekt auch Messungenauigkeiten der nicht-berücksichtigten Positionsmesswerte mitbetrachtet und bilden so eine breitere Entscheidungsgrundlage.

Falls gewünscht, können die Positionsmesswerte mittels eines Mobilfunkempfängers der Onboard-Unit durch Ortung in einem terrestrischen Mobilfunknetz erzeugt werden. Besonders vorteilhaft ist es, wenn die Positionsmesswerte mittels eines Satellitennavigationsempfängers der Onboard-Unit durch Ortung in einem Satellitennavigationssystem (global navigation satellite system, GNSS) erzeugt werden.

Die Bestimmung des Positionsqualitätsmaßes ist in verschiedenen Varianten möglich, die auch miteinander kombiniert oder nacheinander angewendet werden können. Eine erste Ausführungsform, die speziell für GNSS-basierte OBUs geeignet ist, besteht darin, dass der Satellitennavigationsempfänger zu jedem Positionsmesswert einen zugehörigen DOP-Wert ("dilution of precision"), bevorzugt HDOP-Wert ("horizontal dilution of precision"), als Grundlage für dessen Positionsqualitätsmaß ausgibt. DOP- und HDOP-Werte werden von vielen handelsüblichen Satellitennavigationsempfängern nativ zu jedem Positionsmesswert bereitgestellt und geben die geometrischen Verhältnisse der aktuellen Satellitenkonstellation an, die hier als Basis eines möglichen Streubereichs des jeweiligen Positionsmesswerts dienen.

In einer alternativen oder ergänzenden Ausführungsform wird das Positionsqualitätsmaß eines Positionsmesswerts in Abhängigkeit von dessen Abstand zu einem nächstliegenden Straßensegment der digitalen Straßenkarte erzeugt. Eine solche Vorgehensweise entspricht einem vereinfachten Map-Matching-Verfahren, in dem keine komplexe Plausibilitätsprüfung anhand benachbarter Positionsmesswerte durchgeführt wird, sondern lediglich der Abstand zum nächstliegenden Straßensegment bestimmt wird. Somit findet die Robustheit des Map-Matching-Verfahrens bereits bei der Erzeugung des Positionsqualitätsmaßes Eingang in das erfindungsgemäße Verfahren, sodass z.B. einzelne weit abliegende Positionsmesswerte ("Ausreißer" bzw. "outlier") nicht berücksichtigt werden. In thick-client-OBUs, wo die digitale Straßenkarte in der OBU vorliegt, kann diese Ausführungsform direkt umgesetzt werden und ist deshalb besonders vorteilhaft. Jedoch können dazu auch thin-client-OBUs eingesetzt werden, die diesen Schritt an einen externen Map-Matching-Proxy auslagern.

In einer weiteren alternativen oder zusätzlichen Ausführungsform wird das Positionsqualitätsmaß eines Positionsmesswerts in Abhängigkeit von dessen Abstand zu einem Erwartungswert erzeugt, welcher für den genannten Positionsmesswert durch Interpolation aus benachbarten Positionsmesswerten der Folge gebildet wird. Einzelne "Ausreißer" können so auch ohne Map-Matching aus dem Verfahren ausgeschieden werden. Dabei können auch mehr als zwei benachbarte Positionsmesswerte zur Interpolation herangezogen werden, insbesondere für Interpolationen höherer (nicht-linearer) Ordnung, was die Treffsicherheit erhöht.

Alternativ kann das Positionsqualitätsmaß eines Positionsmesswerts in Abhängigkeit von dessen Abstand zu einem Erwartungswert erzeugt werden, welcher für den genannten Positionsmesswert durch Extrapolation aus vorhergehenden Positionsmesswerten der Folge gebildet wird. Nachfolgende Positionsmesswerte müssen dazu, anders als bei der Interpolation, noch nicht bekannt sein, sodass sich diese Variante besonders für eine Echtzeit-Implementierung eignet. Auch hier kann mehr als ein vorhergehender Positionsmesswert zur Extrapolation herangezogen werden, insbesondere für Extrapolationen höherer (nicht-linearer) Ordnung oder z.B. bei Verwendung eines Kalman-Filters zur Extrapolation, was wieder die Treffsicherheit erhöht.

Viele Satellitennavigationsempfänger können heute mit hoher Genauigkeit bereits nativ auch ihre Geschwindigkeit und Bewegungsrichtung sowie ihre Beschleunigung bestimmen. In solchen Fällen ist es besonders günstig, wenn der Satellitennavigationsempfänger zu jedem Positionsmesswert einen zugehörigen Bewegungsvektor ausgibt, welcher zur Extrapolation des Erwartungswerts herangezogen wird. Ein solcher aus Geschwindigkeit und Bewegungsrichtung - gegebenenfalls unter Zuhilfenahme des Werts für die Beschleunigung - gebildeter Bewegungsvektor lässt den Erwartungswert für den folgenden Positionsmesswert besonders präzise abschätzen und liefert einen guten Anhaltspunkt für das Erzeugen des Positionsqualitätmaßes.

Alternativ dazu kann die Onboard-Unit zu jedem Positionsmesswert einen Bewegungsmesswert von einem Fahrzeugsensor empfangen, welcher zur Extrapolation des Erwartungswerts herangezogen wird. Der Bewegungsmesswert kann dabei von einem Geschwindigkeits- oder Trägheitssensor, gegebenenfalls auch von einem Tachograph des Fahrzeugs, gesendet werden und auch eine Kombination der Messwerte solcher Sensoren sein. Dies führt ebenso zu einer präzisen Abschätzung des Erwartungswerts, und zwar ohne von einem GNSS abhängig zu sein.

Die Erfindung wird nachfolgend anhand von in den beigeschlossenen Zeichnungen dargestellten Ausführungsbeispielen näher erläutert. In den Zeichnung zeigen:

Fig. 1 einen Ausschnitt eines durch eine digitale Straßenkarte modellierten Straßennetzes schematisch in der Draufsicht;

Fig. 2 eine zur Verwendung im erfindungsgemäßen Verfahren geeignete Onboard-Unit in einem schematischen Blockschaltbild;

Fig. 3 eine der Abbiegungen des Straßennetzes von Fig. 1 vergrößert im Detail;

Fig. 4a ein Flussdiagramm eines Teils des erfindungsgemäßen Verfahrens, in dem Positions- und Satzqualitätsmaße für die Weglängenermittlung einer OBU herangezogen werden;

Fig. 4b ein Flussdiagramm eines Teils des erfindungsgemäßen Verfahrens, in dem die Segmentlänge eines Straßensegments der digitalen Straßenkarte aktualisiert wird;

die Fig. 5 und 6 verschiedene Varianten der Erzeugung eines Positionsqualitätsmaßes für einen Positionsmesswert einmal in funktioneller Blockschaltbildform (Fig. 5) und einmal anhand beispielhafter Positionsmesswerte im Straßennetz (Fig. 6);

Fig. 7 den Schritt des Entnehmens von Sätzen von Positionsmesswerten entsprechend den Varianten von Fig. 5 und 6 im Detail; und

Fig. 8 die satzqualitätsabhängige Weglängenermittlung anhand des Beispiels der Fig. 5 bis 7 im Detail.

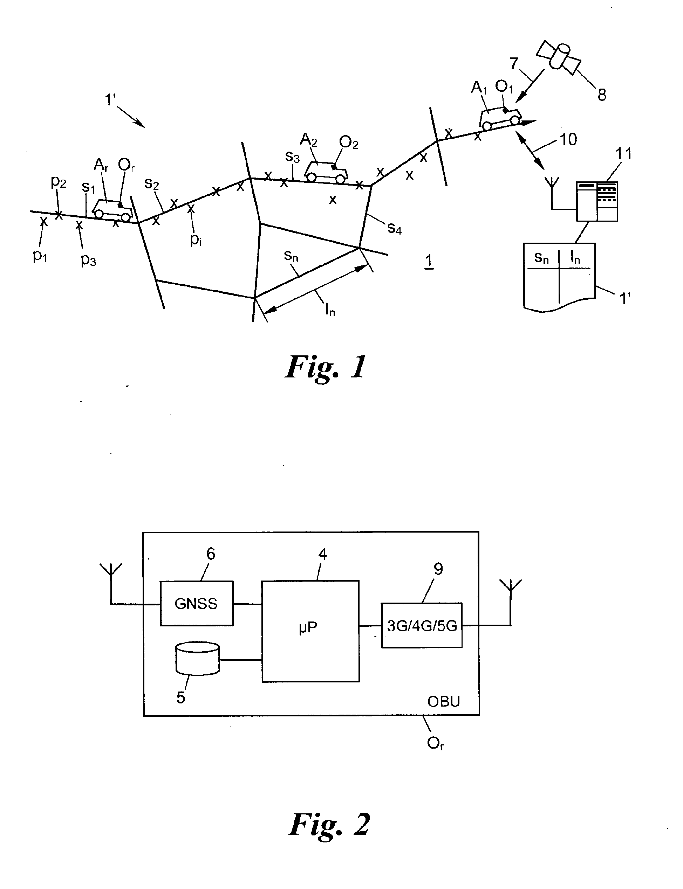

Fig. 1 zeigt ein Straßennetz 1, das in Form einer digitalen Straßenkarte 1' aus einem Netzgraphen von Straßensegmenten $s_1$, $s_2$, ..., allgemein $s_n$, modelliert ist. Mehrere beispielhaft dargestellte Fahrzeuge $A_1$, $A_2$, ..., allgemein $A_r$, bewegen sich im Straßennetz 1 und führen jeweils eine Onboard-Unit (OBU) $O_1$, $O_2$, ..., allgemein $O_r$, mit, welche befähigt ist, sich selbst im Straßennetz 1 zu lokalisieren.

Jede OBU $O_r$ verfügt zu diesem Zweck neben einem Mikroprozessor 4 und einem Speicher 5 über einen Satellitennavigationsempfänger 6 (Fig. 2), mit welchem sie Navigationssignale 7 eines globalen Satellitennavigationssystems 8 (global navigation satellite system, GNSS) wie GPS, GLONASS, GALILEO od. dgl. empfängt und daraus fortlaufend Messwerte ihrer eigenen Position ("position fixes") $p_1$, $p_2$, ..., allgemein $p_i$ (genauer: $p_{i,r}$; zur Vereinfachung wird jedoch im Folgenden, soweit von einer OBU $O_r$ gesprochen wird, auf die Beifügung des OBU-spezifischen Index r verzichtet), erzeugt. Alternativ könnte die OBU $O_r$ ihre Positionsmesswerte $p_i$ auch auf andere Art ermitteln, z.B. durch Funktriangulation, Zellkennungsauswertung od. dgl. in einem terrestrischen Mobilfunknetz (public land mobile network, PLMN) wie einem GSM-, UMTS- oder anderem 3G/4G/5G-Netz.

Gemäß Fig. 2 ist jede OBU $O_r$ weiters mit einem Sendeempfänger 9 ausgestattet, mittels welchem sie die Positionsmesswerte $p_i$ über ein Mobilfunknetz 10 an eine Mautzentrale 11 senden kann. Das Mobilfunknetz 10 kann von der geschilderten Art sein, z.B. ein GSM-, UMTS- oder anderes 3G/4G/5G-Netz, oder ein Netz geografisch verteilter Kurzstreckenfunkbaken, z.B. nach dem WAVE-Standard (wireless access for vehicular environments) oder sogar ein ad-hoc-Netz von mobilen Netzknoten, z.B. ein VANET (vehicular ad-hoc network). Die Positionsmesswerte $p_i$ könnten auch - alternativ oder zusätzlich - von solchen Netzen abgeleitet werden.

In der Mautzentrale 11 können z.B. aus den so erhaltenen Positionsdaten $p_i$ durch Kartenabgleich ("Map-Matching") mit der digitalen Straßenkarte 1' jene Straßensegmente $s_{n,r}$ bestimmt werden, welche das Fahrzeug $A_r$ befahren hat. Das Map-Matching könnte auch in einem der Mautzentrale 11 vorgeordneten, gesonderten Kartenabgleichsserver ("Map-Matching-Proxy") durchgeführt werden oder auch gleich in der OBU $O_r$, wenn die digitale Straßenkarte in ihrem Speicher 5 abgelegt ist. Aus den in der digitalen Straßenkarte 1' hinterlegten, bekannten Segmentlängen In der ermittelten Straßensegmente $s_{n,r}$ kann dann die Länge $l_r$ des vom Fahrzeug $A_r$ im Straßennetz 1 zurückgelegten Wegs berechnet werden.

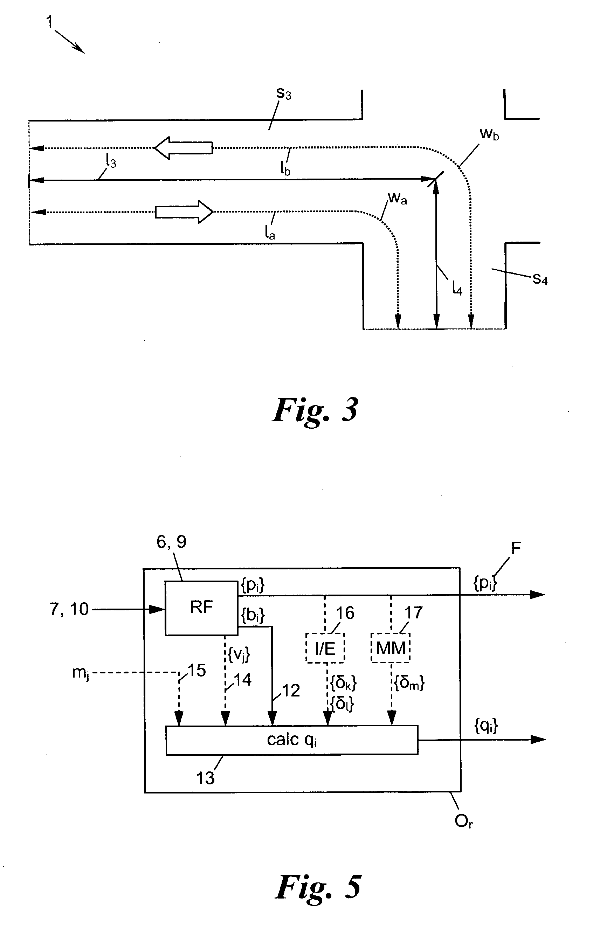

Fig. 3 veranschaulicht eines der Probleme einer derartigen Weglängenermittlung durch Map-Matching. Aufgrund von Baustellen, vorübergehender Umleitungen, Kurven, die von Fahrern häufig "geschnitten" (abgekürzt) werden, oder auch einfach nur wegen der begrenzten Auflösung von digitalen Straßenkarten 1', welche mehrspurige oder Gegenverkehrs-Straßenabschnitte häufig nur durch ein einziges Straßensegment $s_n$ modellieren, weichen die Weglängen $l_a$, $l_b$ der von Fahrern in der Praxis zurückgelegten Wege $w_a$, $w_b$ von den hiefür in der Straßenkarte 1' hinterlegten Segmentlängen $l_n$ (hier: $l_3$, $l_4$) ab. Das im Folgenden geschilderte Verfahren berücksichtigt dieses Problem, um eine genauere Weglängenbeschreibung für Map-Matching-Verfahren zu erzielen.

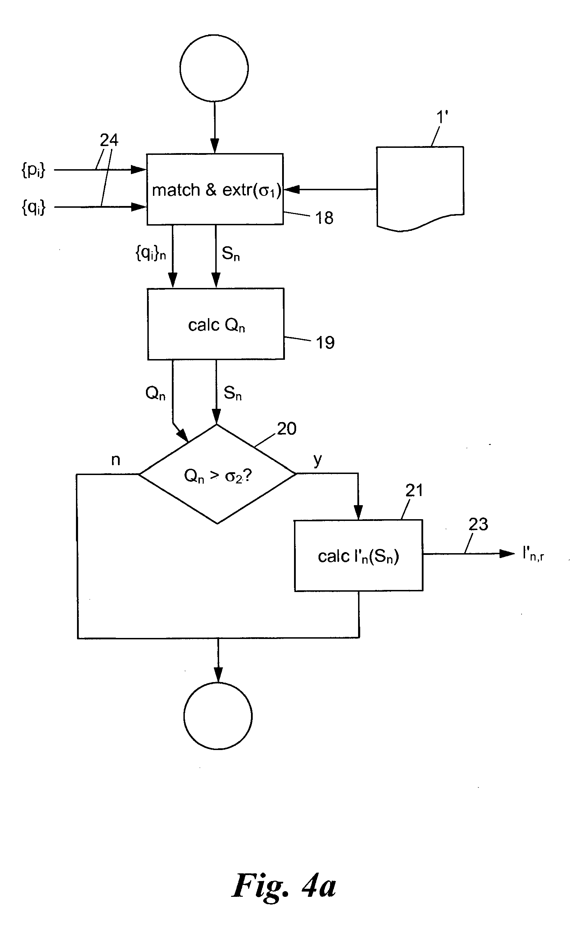

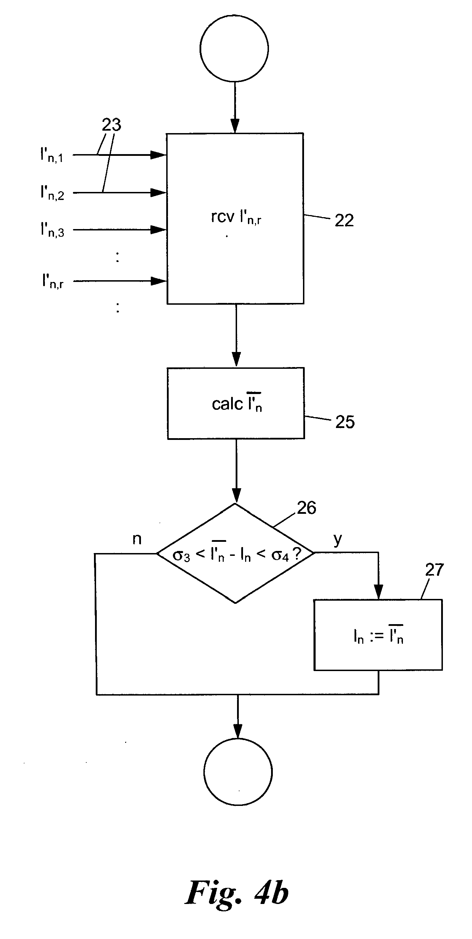

Die Fig. 4a und 4b zeigen das Verfahren in verschiedenen Phasen und die Fig. 5 bis 8 in einigen Details. Die Verfahrensphasen der Fig. 4a und 5 bis 8 können sowohl zur Gänze in einer OBU $O_r$ als auch teilweise in einer OBU $O_r$ und teilweise in der Mautzentrale 11 und/oder einem dieser vorgelagerten Map-Matching-Proxy ablaufen; die Verfahrensphase von Fig. 4b kann in der Mautzentrale 11 und/oder einem dieser vorgelagerten Map-Matching-Proxy ablaufen.

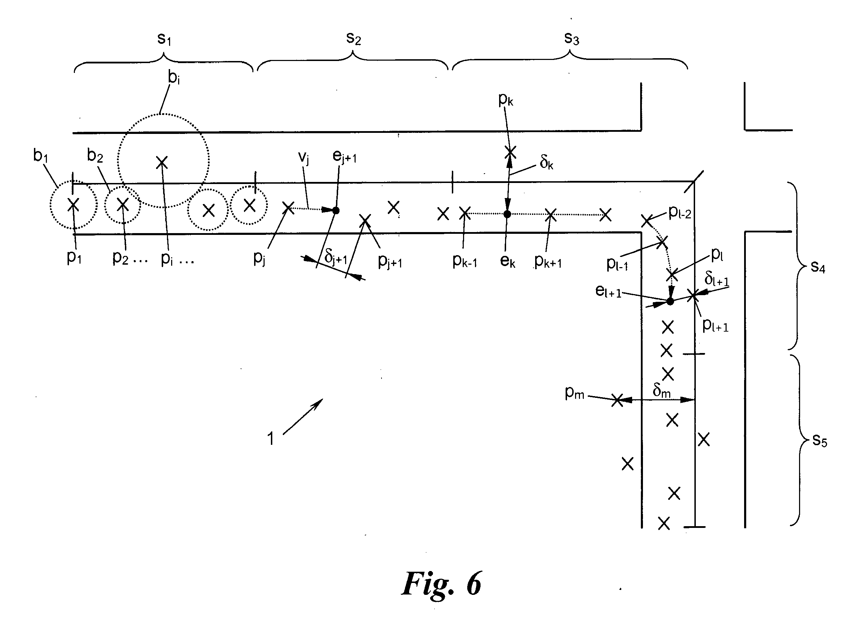

Das Verfahren der Fig. 4a und 4b geht - in optionalen Ausführungsformen - von einer speziellen Ausbildung der OBUs $O_r$ aus, wonach diese zu jedem Positionsmesswert $p_i$ jeweils ein zugehöriges Qualitätsmaß $q_i$ des Positionsmesswerts $p_i$ erzeugen, d.h. zwei einander zugeordnete Folgen $\{p_i\}$ (im Weiteren auch F genannt) und $\{q_i\}$ von Positionsmesswerten $p_i$ und Positionsqualitätsmaßen $q_i$ bzw. eine Folge $\{(p_i, q_i)\}$ von Paaren von Positionsmesswerten $p_i$ und Positionsqualitätsmaßen $q_i$. Die Fig. 5 und 6 zeigen verschiedenste Varianten der Erzeugung eines Positionsqualitätsmaßes $q_i$ für einen Positionsmesswert $p_i$, wobei in jedem der beispielhaften Straßensegmente $s_1$ - $s_5$ von Fig. 6 jeweils eine andere Variante dargestellt ist.

Wie im Straßensegment $s_1$ von Fig. 6 gezeigt, besteht eine erste Möglichkeit darin, dass eine OBU $O_r$ einen Satellitennavigationsempfänger 6 verwendet, welcher bereits selbst ("intrinsisch") zu jedem Positionsmesswert $p_i$ auch einen Messfehler- bzw. Streubereichswert $b_i$ bereitstellt, der im einfachsten Fall direkt als Grundlage für das Positionsqualitätsmaß $q_i$ dienen kann, z.B. in der Form $q_i = 1/b_i$. Derartige Streubereichswerte $b_i$ können beispielsweise die Werte sog. DOP ("dilution of precision"), PDOP ("positional DOP"), TDOP ("time DOP"), GDOP ("geometric DOP") oder bevorzugt HDOP ("horizontal DOP") sein, wie sie von handelsüblichen GNSS-Empfängern, z.B. GPS-Empfängern, auf Basis der aktuellen Satellitenkonstellation und der damit verbundenen Messfehler erzeugt werden.

Wenn eine OBU $O_r$ anstelle (oder zusätzlich) zu dem Satellitennavigationsempfänger 6 einen Mobilfunknetz-Sendeempfänger 9 zur Positionsbestimmung einsetzt, könnte der Streubereichswert $b_i$ beispielsweise auch von diesem intrinsisch erzeugt werden, z.B. anhand der aktuell empfangbaren Basisstationen des Mobilfunknetzes 10 oder der aktuellen Lokalisierungsgenauigkeit entsprechender Mobilfunknetzdienste ("location based services").

Pfad 12 in Fig. 5 zeigt schematisch eine solche direkte Heranziehung der Streubereichswerte $b_i$ der Empfänger 6, 9 für die Erzeugung der Positionsqualitätsmaße $q_i$ in einem Block 13.

Im Straßensegment $s_2$ von Fig. 6 ist eine zweite Variante der Erzeugung der Positionsqualitätsmaße $q_i$ veranschaulicht. In dieser Variante liefert der Satellitennavigationsempfänger 6 zu jedem Positionsmesswert $p_j$ jeweils auch einen aktuellen Bewegungsvektor $v_j$ (siehe Pfad 14 in Fig. 5), umfassend Richtung und Geschwindigkeit $g_j$ einer OBU $O_r$ und eventuell auch ihre Beschleunigung, welche Werte von handelsüblichen Satellitennavigationsempfängern 6 z.B. mittels Doppler-Messungen an dem empfangenen Satellitennavigationssignal 7 mit besonders hoher Genauigkeit ermittelt werden können. Auch handelsübliche Mobilfunkempfänger 9 könnten einen derartigen Bewegungsvektor $v_j$ z.B. anhand von Doppler-Messungen an den von umliegenden Basisstationen empfangenen Signalen ermitteln. In beiden Varianten könnte der Bewegungsvektor $v_j$ auch zusätzlich oder ausschließlich durch ein Trägheitsmesssystem (inertial measurement unit, IMU) in Verbindung mit z.B. einem elektronischen Kompasssystem ermittelt werden.

Ausgehend von einem aktuellen Positionsmesswert $p_j$ kann anhand des aktuellen Bewegungsvektors $v_j$ ein Erwartungswert $e_{j+1}$ für den jeweils nächsten Positionsmesswert $p_{j+1}$ der Folge F bzw. $\{p_i\}$ geschätzt (extrapoliert) werden, und die Abweichung $\delta_{j+1}$ des

nächsten Positionsmesswerte $p_{j+1}$ von seinem Erwartungswert $e_{j+1}$ stellt - unter der Annahme, dass z.B. ein Doppler-bestimmter Bewegungsvektor $v_j$ sehr hohe Genauigkeit hat - wieder ein Streubereichsmaß dar, das als Grundlage für die Berechnung des Positionsqualitätsmaßes $q_{j+1}$ des Positionsmesswerts $p_{j+1}$ in Block 13 dienen kann, z.B. in der Form $q_{j+1} \stackrel{\wedge}{=} 1/\delta_{j+1}$.

Alternativ (oder zusätzlich) zu dem Bewegungsvektor $v_j$ könnte eine OBU $O_r$ auch Bewegungswerte $m_j$ von einem Fahrzeugsensor ihres Fahrzeugs $A_r$, z.B. einem Geschwindigkeits- oder Trägheitssensor, Tachometer, Odometer, Fahrtenschreiber od. dgl., empfangen, siehe Pfad 15 in Fig. 5, welche ebenso zur Bestimmung eines Erwartungswerts $e_{j+1}$ für den nächsten Positionsmesswert $p_{j+1}$ und damit der Abweichung $\delta_{j+1}$ und des Positionsqualitätsmaßes $q_{j+1}$ verwendet werden können.

Anhand der Straßensegmente $s_3$ und $s_4$ von Fig. 6 und des Blocks 16 von Fig. 5 ist eine weitere Variante der Erstellung des Positionsqualitätsmaßes $q_i$ gezeigt, u.zw. durch Inter- bzw. Extrapolation von Erwartungswerten $e_k$, $e_{l+1}$ aus der Folge F von Positionsmesswerten $p_i$. Im Straßensegment $s_3$ wird beispielhaft ein Erwartungswert $e_k$ durch Interpolation zwischen zwei dem Positionsmesswert $p_k$ benachbarten Positionsmesswerten $p_{k-1}$ und $p_{k+1}$ gebildet und die Abweichung $\delta_k$ des Positionsmesswerts $p_k$ dazu ermittelt. Im Straßensegment $s_4$ wird ein Erwartungswert $e_{l+1}$ für einen nächsten Positionsmesswert $p_{l+1}$ durch Extrapolation aus vorhergehenden Positionsmesswerten ..., $p_{l-2}$, $p_{l-1}$, $p_l$ gebildet und wieder die Abweichung $\delta_{l+1}$ des Positionsmesswerts $p_{l+1}$ dazu bestimmt.

Die Inter- bzw. Extrapolation kann jeweils auch anhand von zwei oder mehreren voraus- bzw. nachgehenden Positionsmesswerten $p_i$ der Folge F durchgeführt werden, und sowohl lineare Inter- und Extrapolationen als auch solche höherer Ordnung ("wavelet-fitting", "spline fitting") können in Betracht gezogen und in einem entsprechenden Inter- bzw. Extrapolierer 16 von Fig. 5 ausgeführt werden.

Aus den Abweichungen $\delta_k$, $\delta_l$ können dann wieder im Block 13 die entsprechenden Positionsqualitätsmaße $q_i$ (hier: $q_k$, $q_l$) ermittelt werden, z.B. in der Form $q_k \stackrel{\wedge}{=} 1/\delta_k$ und $q_l \stackrel{\wedge}{=} 1/\delta_l$.

Im Straßensegment $s_5$ von Fig. 6 und Block 17 von Fig. 5 ist eine Variante gezeigt, bei der für jeden Positionsmesswert $p_m$ durch Map-Matching-Vergleich mit der digitalen Straßenkarte 1' der Abstand bzw. die Abweichung $\delta_m$ vom nächstliegenden Straßensegment $s_k$, hier $s_5$, bestimmt wird. Bei Verwendung einer "thick-client"-OBU kann das Map-Matching von Block 17 in der OBU $O_r$ ablaufen; im Falle einer "thin-client"-OBU kann dieser Schritt in einen externen Map-Matching-Proxy oder die Mautzentrale 11 ausgelagert werden. Aus der Abweichung $\delta_m$ kann dann wieder im Block 13 das Positionsqualitätsmaß $q_m \stackrel{\wedge}{=} 1/\delta_m$ für den Positionsmesswert $p_m$ bestimmt werden.

Es versteht sich, dass das Positionsqualitätsmaß $q_i$ im Block 13 auch aus einer beliebigen Funktion F, z.B. gewichteten Summe, der Streubereichswerte $b_i$ und Abweichungen $\delta_j$, $\delta_k$, $\delta_l$, $\delta_m$ berechnet werden kann, d.h. qi = f (bi, $\delta_j$, $\delta_k$, $\delta_l$, $\delta_m$).

Die über die Pfade 12 und 15 - 17 erhaltenen Werte könnten in Block 13 gegebenenfalls auch mehrstufig ausgewertet werden, um das Qualitätsmaß qi zu erzeugen, z.B. zunächst mithilfe der Streubereichswerte $b_i$ und, wenn diese ausreichend klein sind, anschließend anhand der Erwartungswerte $e_i$, $e_j$, $e_k$, $e_l$. Auch könnten die Positionsqualitätsmaße $q_i$ für verschiedene Positionsmesswerte $p_i$ unterschiedlich erzeugt werden, z.B. wenn während der GNSS-Ortung DOP-Werte vorliegen, die bei zwischenzeitlicher Mobilfunk-Ortung nicht erstellt werden, oder die Positionsqualitätsmaße $q_i$ werden anhand herstellerspezifischer Qualitätsindikatoren gebildet, die handelsübliche GNSS-Empfänger erzeugen können.

Zurückkommend auf Fig. 4a ist darin jener Abschnitt des Verfahrens gezeigt, der in jeder OBU $O_r$ - oder in der Zentrale 11 (oder einem vorgelagerten Proxy) für jede OBU $O_r$ - durchgeführt wird und dazu dient, für ein Straßensegment $s_n$ auf Grundlage der von einer OBU $O_r$ erzeugten Positionsmesswerte $p_i$ eine von der OBU $O_r$ im Straßensegment $s_n$ zurückgelegte Weglänge $l'_n$ zu ermitteln. Dazu werden in einem ersten Schritt 18 die Positionsmesswerte $\{p_i\}$ einer OBU $O_r$ jeweils dem nächstliegenden Straßensegment $s_n$ der digitalen Straßenkarte 1' zugeordnet ("match"). Die Zuordnung erfolgt dadurch, dass für jeden Positionsmesswert $p_i$ beispielsweise jenes Straßensegment $s_n$ gesucht wird, zu dem der Abstand $\delta_m$, z.B. der Normalabstand, minimal ist. Zusätzlich kann bei der Zuordnung vorgesehen werden, dass auch die Fahrtrichtung des Fahrzeugs $A_r$ bzw. der OBU $O_r$ berücksichtigt wird, d.h. die Historie bzw. zeitliche Abfolge der Positionsmesswerte $p_i$ in der Folge $\{p_i\}$, wenn die Straßensegmente $s_n$ in der digitalen Straßenkarte 1' bestimmten Fahrtrichtungen gewidmet sind. So kann beispielsweise für eine Straße des Straßennetzes 1, die zwei Fahrspuren für einander entgegengesetzte Fahrtrichtungen besitzt, für jede Fahrtrichtung ein eigenes Straßensegment $s_n$ mit Richtungsinformation gespeichert und bei der Zuordnung wird nur dasjenige nächstliegende Straßensegment $s_n$ verwendet werden, welches der Fahrtrichtung des Fahrzeugs $A_r$ bzw. der OBU $O_r$ entspricht.

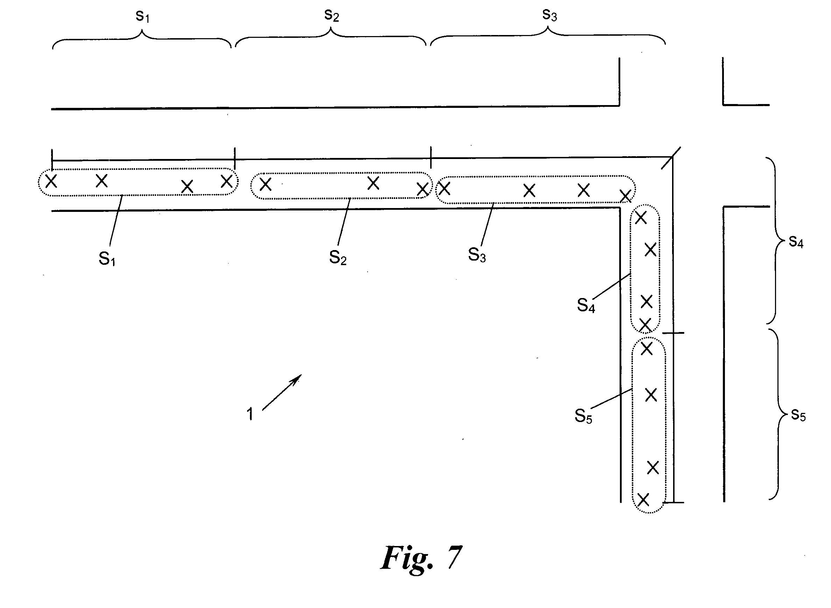

Die derart einem Straßensegment $s_n$ zuordenbaren bzw. zugeordneten Positionsmesswerte $p_i$ werden im Weiteren als ein Satz $S_n$ von Positionsmesswerten $p_i$ aus der Folge F bzw. $\{p_i\}$ betrachtet bzw. entnommen ("extract"). Bei dieser Entnahme bzw. Extraktion kann optional vorgesehen werden, dass Positionsmesswerte $p_i$, deren Positionsqualitätsmaße $q_i$ einen vorgegebenen ersten Schwellwert $\sigma_1$ nicht erreichen bzw. unterschreiten, in die Sätze $S_n$ nicht mitaufgenommen, d.h. nicht berücksichtigt werden. Fig. 7 zeigt das Ergebnis des Schritts 18 für die beispielhaften Positionsmesswerte von Fig. 6.

Wie in Fig. 7 gezeigt, wurde im Satz $S_1$ jener Positionsmesswert $p_i$ aus dem Straßensegment $s_1$ von Fig. 6 nicht berücksichtigt, dessen großer Streubereich $b_i$ zu einem Positionsqualitätsmaß $q_i$ geführt hatte, das kleiner als der Schwellwert $\sigma_1$ war. Ebenso wurden in den Sätzen $S_2$, $S_3$ und $S_4$ die beispielhaften Positionsmesswerte $p_{j+1}$, $p_k$, $p_{l+1}$ von Fig. 6 nicht berücksichtigt, da ihre Abweichungen $\delta_{j+1}$, $\delta_k$, $\delta_{l+1}$ von den jeweiligen Erwartungswerten $e_{j+1}$, $e_k$, $e_{l+1}$ groß und deshalb ihre Positionsqualitätsmaße $q_{j+1}$, $q_k$, $q_{l+1}$ kleiner als der Schwellwert $\sigma_1$ waren. Und in den Satz $S_5$ wurde der beispielhafte Positionsmesswert $p_m$ - neben anderen - aus dem Straßensegment $s_5$ von Fig. 6 nicht mitübernommen, dessen großer Abstand $\delta_m$ vom Straßensegment $s_5$ zu einem den Schwellwert $\sigma_1$ nicht erreichenden Positionsqualitätsmaß $q_m$ geführt hatte.

Die in Schritt 18 entnommenen Sätze $S_n$ von den Schwellwert $\sigma_1$ überschreitenden Positionsmesswerten $p_i$ werden anschließend - gemeinsam mit den den Sätzen $S_n$ zugeordneten Positionsqualitätsmaßen $\{q_i\}_n$ - einem Verfahrensschritt 19 zugeführt, in welchem für jeden Satz $S_n$ ein Satzqualitätsmaß $Q_n$ ermittelt wird, u.zw. in der folgenden Art und Weise.

In einer Ausführungsform wird das Satzqualitätsmaß $Q_n$ aus den jeweiligen Positionsqualitätsmaßen $q_i$ der im Satz $S_n$ enthaltenen Positionsmesswerte $p_i$ ermittelt, z.B. als Durchschnitt oder gewichtete Summe derselben, wofür alle in Mathematik bzw. Statistik bekannten Verfahren zur Verknüpfung von Messwerten geeignet sind.

In einer vereinfachten Ausführungsform wird das Satzqualitätsmaß $Q_n$ lediglich aus der Anzahl A von in den Satz $S_n$ aufgenommenen Positionsmesswerten $p_i$ gebildet, z.B. der absoluten Anzahl von Positionsmesswerten $p_i$ im Satz $S_n$ oder einer "relativen" Anzahl bezogen auf die ursprünglichen Positionsmesswerte $p_i$ der Folge F, d.h. als Verhältnis der Anzahlen von im Satz $S_n$ berücksichtigten Positionsmesswerten $p_i$ zur Summe aus im Satz $S_n$ berücksichtigten und nicht-berücksichtigten Positionsmesswerten $p_i$. Dabei kann auch eine Mindestanzahl von Positionsmesswerten $p_i$ im Satz $S_n$ vorgegeben werden, unterhalb der das Satzqualitätsmaß $Q_n$ auf Null gesetzt wird.

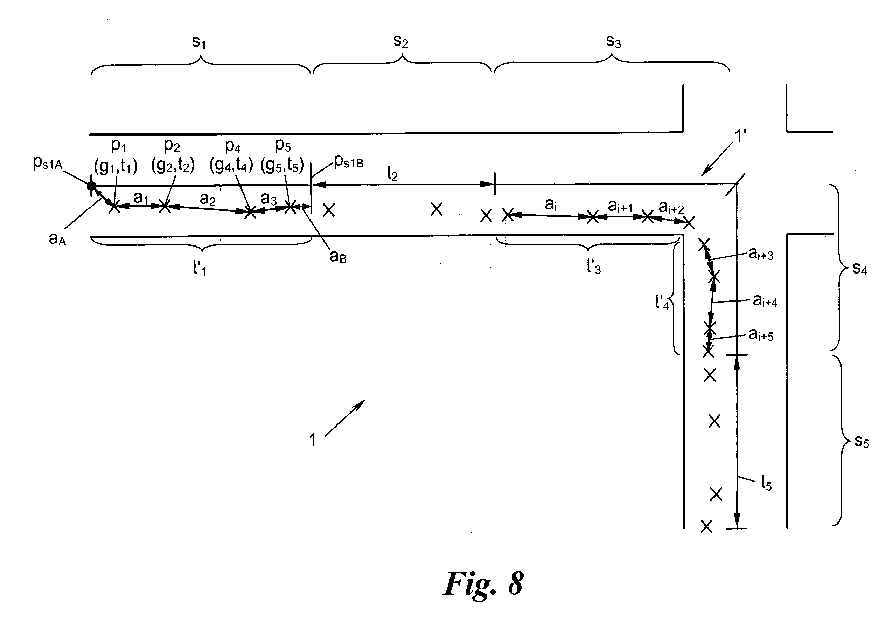

Die Sätze $S_n$ und ihre Satzqualitätsmaße $Q_n$ werden anschließend einem Vergleichsschritt 20 zugeführt, in welchem das Satzqualitätsmaß $Q_n$ jedes Satzes $S_n$ mit einem vorgegebenen zweiten Schwellwert $\sigma_2$ verglichen wird. Übersteigt das Satzqualitätsmaß $Q_n$ den zweiten Schwellwert $\sigma_2$, ist also die Quantität oder Gesamt-Qualität der Positionsmesswerte $p_i$ des Satzes $S_n$ ausreichend gut, wird zu einem Berechnungsschritt 21 verzweigt (Zweig "y"), in welchem der vom Fahrzeug $A_r$ im Straßensegment $s_n$ zurückgelegte Weg aus den gegenseitigen Abständen $a_i$ der aufeinanderfolgenden Positionsmesswerte $p_i$ des Satzes $S_n$ ermittelt wird, siehe beispielsweise Fig. 8:

$$l'_1 = a_1 + a_2 + a_3$$

$$l'_3 = a_i + a_{i+1} + a_{i+2}$$

$$l'_4 = a_{i+3} + a_{i+4} + a_{i+5}$$

allgemein

$$l'_n = \sum_i a_{i,n}$$

bzw. genauer (mit dem OBU-spezifischen Index r geschrieben):

$$l'_{n,r} = \sum_i a_{i,n,r}$$

Dies ist in Fig. 8 beispielhaft für die Straßensegmente $s_1$, $s_3$ und $s_4$ und die Sätze $S_1$, $S_3$ und $S_4$ gezeigt, deren Satzqualitätsmaße $Q_1$, $Q_3$ und $Q_4$ den Schwellwert $\sigma_2$ überschritten: Die Länge $l'_1$ des im Straßensegment $s_1$ und Satz $S_1$ zurückgelegten Wegs ergibt sich hier aus der Summe der gegenseitigen Abstände $a_1$, $a_2$ und $a_3$ der aufeinanderfolgenden Positionsmesswerte $p_1$, $p_2$, $p_4$ und $p_5$ des Satzes $S_1$, d.h. unter Nichtberücksichtigung des in Schritt 18 bereits ausgeschlossenen Positionsmesswertes $p_3$ ($p_i$ in Fig. 6).

Um Messfehler an den Segmentgrenzen zu minimieren, können optional auch die Abstände des jeweils ersten und letzten Positionsmesswerts eines Satzes $S_n$ zu den jeweils benachbarten Endpunkten des Straßensegments $s_n$ berücksichtigt werden, wie beispielhaft in dem Straßensegment $s_1$ für dessen Segmentgrenzen $p_{s1+a}$, $p_{s1+b}$ gezeigt ist: Der Abstand $a_A$ des ersten Positionsmesswerts $p_1$ des Satzes $S_n$ zur nächstliegenden Segmentgrenze $p_{s1A}$ sowie der Abstand $a_B$ des letzten Positionsmesswerts $p_5$ zur nächstliegenden Segmentgrenze $p_{s1B}$ werden hier zusätzlich in der Weglänge $l'_1$ berücksichtigt, d.h.:

$$l'_1 = a_A + a_1 + a_2 + a_3 + a_B ,$$

bzw. allgemein für das Straßensegment n und mit dem OBU-spezifischen Index r:

$$l'_{n,r} = a_{A,n,r} + \sum_i a_{i,n,r} + a_{B,n,r}$$

Die Abstände $a_A$ und $a_B$ zu den Segmentgrenzen $p_{s1A}$ und $p_{s1B}$ können dabei sowohl als kürzeste Punktabstände (wie bei $a_A$ gezeigt) als auch als Normalabstände (wie bei $a_B$ gezeigt) berechnet werden.

Die Abstände $a_1$, $a_2$ und $a_3$ bzw. allgemein $a_i$ (einschließlich $a_A$, $a_B$) können dabei aus den geometrischen Abständen der Positionsmesswerte $p_1$, $p_2$, $p_4$ und $p_5$ (bzw. den jeweiligen Segmentgrenzen $p_{snA}$, $p_{snB}$) selbst bestimmt werden, d.h. $a_i \stackrel{\wedge}{=} (p_{i+1} - p_i)$. Hat die Onboard-Unit $O_r$ z.B. mithilfe des Satellitennavigationsempfängers 6 für jeden Positionsmesswert $p_i$ auch ein zugehöriges Paar $(g_i, t_i)$ von Geschwindigkeit $g_i$ und Messzeitpunkt $t_i$ erzeugt, so können die Abstände $a_1$, $a_2$ und $a_3$ alternativ auch aus den Geschwindigkeiten $g_1$, $g_2$ und $g_4$ und den jeweiligen Differenzen der Messzeitpunkte $t_1$, $t_2$, $t_4$ und $t_5$ der Positionsmesswerte $p_1$, $p_2$, $p_4$ und $p_5$ ermittelt werden, d.h. in der Form $a_i \stackrel{\wedge}{=} g_i \cdot (t_{i+1} - t_i)$.

Das Satzqualitätsmaß $Q_1$ des Satzes $S_1$ wurde im vorliegenden Beispiel als Durchschnitt der Positionsqualitätsmaße $q_i$ der im Satz $S_1$ enthaltenen Positionsmesswerte $p_i$ gebildet. In gleicher Weise werden die Längen $l'_3$ und $l'_4$ für die Sätze $S_3$ und $S_4$ ermittelt.

Erreicht im Vergleichsschritt 20 das Satzqualitätsmaß $Q_n$ den zweiten Schwellwert $\sigma_2$ hingegen nicht, erzeugt die OBU $O_r$ für das Straßensegment $s_n$ keine selbst ermittelte Weglänge $l'_n$. Dies ist wiederum in Fig. 8 beispielhaft für die Straßensegmente $s_2$ und $s_5$ und die Sätze $S_2$ und $S_5$ gezeigt, deren Satzqualitätsmaße $Q_2$ und $Q_5$ den Schwellwert $\sigma_2$ nicht erreichten. Im Falle des Satzes $S_2$ unterschritt z.B. die Anzahl A der im Satz $S_2$ enthaltenen Positionsmesswerte $p_i$ eine Mindestanzahl (hier: vier), im Falle des Satzes $S_5$ war die relative Anzahl A = 4/7 (vier berücksichtigte von insgesamt sieben Positionsmesswerten $p_i$) unterhalb des zweiten Schwellwerts $\sigma_2$.

Es versteht sich, dass in einer vereinfachten Ausführungsform des Verfahrensabschnitts von Fig. 4a die Vergleiche mit den Schwellwerten $\sigma_1$ und $\sigma_2$ und damit die Schritte 19 und 20 entfallen können; im einfachsten Fall werden lediglich die einem Straßensegment $s_n$ der digitalen Straßenkarte 1' zuordenbaren Positionsmesswerte $p_i$ diesem Straßensegment $s_n$ als Satz $S_n$ zugeordnet und daraus im Schritt 21 die von der OBU $O_r$ vermessene Weglänge $l'_n$ (genauer: $l'_{n,r}$) des Straßensegments $s_n$ ermittelt.

Fig. 4b zeigt die weitere Phase des Aktualisierens der digitalen Straßenkarte 1' unter Berücksichtigung der von zwei oder mehreren OBUs $O_r$ für ein und dasselbe Straßensegment $s_n$ gemäß Fig. 4a ermittelten Weglängen $l'_n$, im Weiteren nun mit dem OBU-spezifischen Index r versehen, d.h. ab nun mit $l'_{n,r}$ bezeichnet. Der Verfahrensabschnitt von Fig. 4b wird zweckmäßigerweise zentral durchgeführt, z.B. in der Zentrale 11 oder einem dieser vorgeordneten Proxy, weil in einem ersten Schritt 22 zunächst die von den verschiedenen OBUs $O_r$ ermittelten Weglängen $l'_{n,r}$ für ein Straßensegment $s_n$ gesammelt (empfangen) werden. Der Verfahrensabschnitt von Fig. 4b kann beispielsweise jeweils zu vorgegebenen Zeiten, z.B. ein- oder mehrmals täglich, wöchentlich oder monatlich, oder jeweils nach einer bestimmten Anzahl von für ein Straßensegment $s_n$ gesammelten Weglängen $l'_{n,r}$ durchgeführt bzw. wiederholt werden.

Wenn der Verfahrensabschnitt von Fig. 4a dezentral jeweils in einer der OBUs $O_r$ stattfindet, könnten diese die ermittelten Weglängen $l'_{n,r}$ beispielsweise über das Mobilfunknetz 10 senden (Pfeil 23). Wenn die Verfahrensabschnitte von Fig. 4a für alle OBUs $O_r$ zentral durchgeführt werden, z.B. in der Zentrale 11 oder einem dieser vorgeordneten Proxy, dann könnten die OBUs $O_r$ beispielsweise auch nur ihre Positionsmesswerte $p_i$ (und optional ihre Positionsqualitätsmaße $q_i$) über das Mobilfunknetz 10 senden, d.h. der bereits der Datenweg 24 erfolgt über das Mobilfunknetz 10.

Nach dem Datensammel- bzw. -empfangsschritt 22 von Fig. 4b wird in einem Schritt 25 eine durchschnittliche Weglänge $\overline{l'_n}$ berechnet zu

$$\overline{l'_n} = \frac{1}{R} \sum_{r=1}^{R} l'_{n,r}$$

mit

R........Anzahl der OBUs $O_r$.

Die durchschnittliche Weglänge $\overline{l'_n}$ ist somit der Mittelwert der von zwei oder mehreren OBUs $O_r$ im Straßennetz 1 für ein Straßensegment $s_n$ vermessenen Weglängen $l'_{n,r}$, und zwar bevorzugt nur auf Grundlage jener Positionsmesswerte $p_i$, welche den ersten Schwellwert $\sigma_1$ überschritten, und jener Sätze $S_{n,r}$, welche den zweiten Schwellwert $\sigma_2$ überschritten.

In einem anschließenden Vergleichsschritt 26 wird überprüft, ob die berechnete durchschnittliche Weglänge $\overline{l'_n}$ von der in der digitalen Straßenkarte 1' für das Straßensegment $s_n$ gespeicherten Segmentlänge $l_n$ mindestens um ein vorgegebenes Mindestmaß $\sigma_3$ abweicht. Alternativ oder zusätzlich kann im Vergleichsschritt 26 auch überprüft werden, ob die berechnete durchschnittliche Weglänge $\overline{l'_n}$ von der gespeicherten Segmentlänge $l_n$ höchstens um ein vorgegebenes Höchstmaß $\sigma_4$ abweicht. Wenn ja (Zweig "y" von Schritt 26), wird die in der digitalen Straßenkarte 1' für das Straßensegment $s_n$ gespeicherte Segmentlänge $l_n$ korrigiert bzw. aktualisiert, d.h. die berechnete durchschnittliche Weglänge $\overline{l'_n}$ als neue Segmentlänge $l_n$ des Straßensegments $s_n$ der digitalen Straßenkarte 1' gespeichert (Schritt 27).

Wenn keine signifikante, d.h. das Mindestmaß

$\sigma_3$ überschreitende Abweichung vorliegt (Zweig "n" von Schritt 26), bleibt die in der digitalen Straßenkarte 1' gespeicherte Segmentlänge $l_n$ unangetastet.

In weiterer Folge kann die aktualisierte Straßenkarte 1' mit den aktualisierten Segmentlängen $l_n$ der Straßensegmente $s_n$ wieder für eine Berechnung der von einem Fahrzeug $A_r$ zurückgelegten Weglänge durch Kartenabgleich (Map-Matching) herangezogen werden, und zwar sowohl für Fahrzeuge $A_r$ bzw. OBUs $O_r$, welche soeben zur Aktualisierung der Straßenkarte 1' beigetragen haben, als auch für andere ("dritte") Fahrzeuge $A_r$ bzw. OBUs $O_r$. Dazu werden wieder die von einer OBU $O_r$ eines Fahrzeugs $A_r$ erzeugten Positionsmesswerte $p_i$ den jeweils nächstliegenden Straßensegmenten $s_n$ der digitalen Straßenkarte 1' zugeordnet (soweit nicht schon in Schritt 18 erfolgt), und die entsprechenden Segmentlängen $l_n$ der als befahren betrachteten Straßensegmente $s_n$ und zu einer gesamten, vom Fahrzeug $A_r$ zurückgelegten Weglänge

$$l_r = \sum_n l_{n,r}$$

aufsummiert. Die solcherart aufsummierte zurückgelegte Weglänge $l_r$ hat eine höhere Genauigkeit als vor der Aktualisierung der digitalen Straßenkarte 1' und berücksichtigt auch von Fahrzeugen mehrheitlich benutzte Abkürzungen, Umwege, "Kurvenabschneider" sowie temporärer Umleitungen, Baustellen od.dgl. im Straßennetz 1.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

**Patentansprüche**

1. Verfahren zum Aktualisieren einer ein Straßennetz (1) repräsentierenden digitalen Straßenkarte (1'), in der Straßensegmente ($s_n$) mit Segmentlängen ($l_n$) gespeichert sind, umfassend:

   Ausstatten zumindest zweier sich im Straßennetz (1) bewegender Fahrzeuge ($A_r$) mit jeweils zumindest einer Positionsmesswerte ($p_i$) erzeugenden Onboard-Unit ($O_r$); ferner **gekennzeichnet durch** die folgenden Schritte:

   wenn ein erster Satz ($S_n$) von Positionsmesswerten ($p_i$) einer ersten Onboard-Unit ($O_r$) zu einem Straßensegment ($s_n$) der digitalen Straßenkarte (1') zuordenbar ist, Ermitteln (21) einer ersten Weglänge ($l'_{n,r}$) aus den gegenseitigen Abständen ($a_i$) aufeinanderfolgender Positionsmesswerte ($p_i$)

des ersten Satzes ($S_n$) plus den Abständen ($a_A$, $a_B$) des ersten und letzten Positionsmesswerts ($p_1$, $p_5$) des ersten Satzes ($S_n$) zur jeweils benachbarten Segmentgrenze ($p_{s1A}$, $P_{s1B}$);

   wenn ein zweiter Satz ($S_n$) von Positionsmesswerten ($p_i$) einer zweiten Onboard-Unit ($O_r$) zu demselben Straßensegment ($s_n$) zuordenbar ist, Ermitteln (21) einer zweiten Weglänge ($l'_{n,r}$) aus den gegenseitigen Abständen ($a_i$) aufeinanderfolgender Positionsmesswerte ($p_i$) des zweiten Satzes ($S_n$) plus den Abständen ($a_A$, $a_B$) des ersten und letzten Positionsmesswerts ($p_1$, $p_5$) des zweiten Satzes ($S_n$) zur jeweils benachbarten Segmentgrenze ($P_{s1A}$, $P_{s1B}$);

   Berechnen (25) einer durchschnittlichen Weglänge ($\overline{l'_n}$) für das genannte Straßensegment aus zumindest der ersten und der zweiten Weglänge; und

   wenn die berechnete durchschnittliche Weglänge ($\overline{l'_n}$) von der gespeicherten Segmentlänge ($l_n$) des genannten Straßensegments ($s_n$) mindestens um ein vorgegebenes Mindestmaß ($\sigma_3$) und/oder höchstens um ein vorgegebenes Höchstmaß ($\sigma_4$) abweicht, Speichern (27) der durchschnittlichen Weglänge ($\overline{l'_n}$) als aktualisierte gespeicherte Segmentlänge ($l_n$) dieses Straßensegments ($s_n$) in der digitalen Straßenkarte (1').

2. Verfahren nach Anspruch 1, **dadurch gekennzeichnet, dass** die gesamte, vom ersten oder zweiten Fahrzeug ($A_r$) zurückgelegte Weglänge ($l_r$) aus zumindest der aktualisierten gespeicherten Segmentlänge ($l_n$) ermittelt wird.

3. Verfahren nach Anspruch 1, **dadurch gekennzeichnet, dass**, wenn Positionsmesswerte ($p_i$) einer dritten Onboard-Unit ($O_r$) eines dritten Fahrzeugs ($A_r$) zum genannten Straßensegment ($s_n$) zuordenbar sind, die gesamte, vom dritten Fahrzeug ($A_r$) zurückgelegte Weglänge ($l_r$) aus zumindest der aktualisierten gespeicherten Segmentlänge ($l_n$) ermittelt wird.

4. Verfahren nach einem der Ansprüche 1 bis 3, **dadurch gekennzeichnet, dass** die Positionsmesswerte ($p_i$) von den Onboard-Units ($O_r$) an eine Zentrale (11) gesendet werden, in welcher die digitale Straßenkarte (1') gespeichert und aktualisiert wird.

5. Verfahren nach Anspruch 4, **dadurch gekennzeichnet, dass** die aktualisierte digitale Straßenkarte (1') von der Zentrale (11) an zumindest eine On-

board-Unit (O$_r$) zurückgesandt wird.

6. Verfahren nach einem der Ansprüche 1 bis 5, **dadurch gekennzeichnet, dass** das Zuordnen (18) des ersten und des zweiten Satzes (S$_n$) zu dem Straßensegment (s$_n$) durch Auffinden des jeweils nächstliegenden Straßensegments (s$_n$) erfolgt.

7. Verfahren nach einem der Ansprüche 1 bis 5, **dadurch gekennzeichnet, dass** die digitale Straßenkarte (1') für unterschiedliche Fahrtrichtungen auf einer Straße jeweils ein gesondertes Straßensegment (s$_n$) enthält und das Zuordnen (18) durch Auffinden des jeweils nächstliegenden Straßensegments (s$_n$) mit derselben Fahrtrichtung erfolgt.

8. Verfahren nach einem der Ansprüche 1 bis 7, **dadurch gekennzeichnet, dass** die gegenseitigen Abstände (a$_i$) aus den Positionsmesswerten (p$_i$) selbst ermittelt werden.

9. Verfahren nach einem der Ansprüche 1 bis 7, **dadurch gekennzeichnet, dass** die Onboard-Units (O$_r$) für jeden Positionsmesswert (p$_i$) ein zugehöriges Paar (g$_i$, t$_i$) von Geschwindigkeit (g$_i$) und Messzeitpunkt (t$_i$) erzeugen, und dass die gegenseitigen Abstände (a$_i$) jeweils zweier aufeinanderfolgender Positionsmesswerte (p$_i$) einer Onboard-Unit (O$_r$) aus der Geschwindigkeit (g$_i$) am ersten der beiden Positionsmesswerte (p$_i$) und der Differenz der Messzeitpunkte (t$_i$, t$_{i+1}$) der beiden Positionsmesswerte (p$_i$, p$_{i+1}$) ermittelt werden.

10. Verfahren nach einem der Ansprüche 1 bis 9, **dadurch gekennzeichnet, dass** die Onboard-Units (O$_r$) für jeden Positionsmesswert (p$_i$) auch ein zugehöriges Positionsqualitätsmaß (q$_i$) erzeugen, und dass für das Ermitteln einer Weglänge (l'$_{n,r}$) nur jene Positionsmesswerte (p$_i$) verwendet werden, deren Positionsqualitätsmaß (q$_i$) einen vorgegebenen ersten Schwellwert (σ$_1$) überschreitet.

11. Verfahren nach einem der Ansprüche 1 bis 10, **dadurch gekennzeichnet, dass** anhand der Anzahl (A) oder der Positionsqualitätsmaße (q$_i$) der einem Straßensegment (s$_n$) zuordenbaren Positionsmesswerte (p$_i$) einer Onboard-Unit (O$_r$) ein Satzqualitätsmaß (Q$_n$) gebildet wird, und dass aus diesen Positionsmesswerten (p$_i$) nur dann eine Weglänge (l'$_{n,r}$) ermittelt oder für die Berechnung (25) der durchschnittlichen Weglänge ($\overline{l'_n}$) verwendet wird, wenn das Satzqualitätsmaß (Q$_n$) einen vorgegebenen zweiten Schwellwert (σ$_1$) überschreitet.

12. Verfahren nach Anspruch 11, **dadurch gekennzeichnet, dass** das Satzqualitätsmaß (Q$_n$) aus den Positionsqualitätsmaßen (q$_i$) des Satzes (S$_n$) als Durchschnitt derselben oder als Verhältnis der Anzahlen (A) von im Satz (S$_n$) berücksichtigten Positionsmesswerten (p$_i$) zur Summe aus berücksichtigten plus nicht-berücksichtigten Positionsmesswerten (p$_i$) ermittelt wird.

13. Verfahren nach einem der Ansprüche 1 bis 12, **dadurch gekennzeichnet, dass** die Positionsmesswerte (p$_i$) mittels eines Satellitennavigationsempfängers (6) der Onboard-Unit (O$_r$) durch Ortung in einem Satellitennavigationssystem (8) erzeugt werden.

14. Verfahren nach Anspruch 13, **dadurch gekennzeichnet, dass** der Satellitennavigationsempfänger (6) zu jedem Positionsmesswert (p$_i$) einen zugehörigen DOP-Wert, bevorzugt HDOP-Wert, als Grundlage für dessen Positionsqualitätsmaß (q$_i$) ausgibt.

15. Verfahren nach einem der Ansprüche 1 bis 14, **dadurch gekennzeichnet, dass** das Positionsqualitätsmaß (q$_m$) eines Positionsmesswerts (p$_m$) in Abhängigkeit von dessen Abstand (δ$_m$) zum aufgefundenen nächstliegenden Straßensegment (s$_n$) der digitalen Straßenkarte (1') erzeugt wird.

16. Verfahren nach einem der Ansprüche 1 bis 15, **dadurch gekennzeichnet, dass** das Positionsqualitätsmaß (q$_k$, q$_j$, q$_l$) eines Positionsmesswerts (p$_k$, p$_j$, p$_l$) in Abhängigkeit von dessen Abstand (δ$_k$, δ$_j$, δ$_l$) zu einem Erwartungswert (l$_k$, l$_j$, l$_l$) erzeugt wird, welcher für den genannten Positionsmesswert (p$_k$, p$_j$, p$_l$) durch Interpolation aus benachbarten oder Extrapolation aus vorhergehenden Positionsmesswerten (p$_k$, p$_j$, p$_l$) gebildet wird.

**Claims**

1. A method for updating a digital road map (1') which represents a road system (1) and in which road segments (s$_n$) having segment lengths (l$_n$) are stored, comprising:

   equipping at least two vehicles (A$_r$) that are moving about in the road system (1) with at least one respective onboard unit (O$_r$) generating position readings (p$_i$);
   further **characterized by** the following steps:

   if a first set (S$_n$) of position readings (p$_i$) of a first onboard unit (O$_r$) can be associated with a road segment (s$_n$) of the digital road map (1'), determining (21) a first path length (l'$_{n,r}$) based on the mutual distances (a$_i$) of consecutive position readings (p$_i$) of the first set (S$_n$) plus the distances (a$_A$, a$_B$) of the first and last position readings (p$_1$, p$_5$) of the

first set ($S_n$) from the respective neighbouring segment boundary ($p_{s1A}$, $p_{s1B}$);

if a second set ($S_n$) of position readings ($p_i$) of a second onboard unit ($O_r$) can be associated with the same road segment ($s_n$), determining (21) a second path length ($l'_{n,r}$) based on the mutual distances ($a_i$) of consecutive position readings ($p_i$) of the second set ($S_n$) plus the distances ($a_A$, $a_B$) of the first and last position readings ($p_1$, $p_5$) of the second set ($S_n$) from the respective neighbouring segment boundary ($p_{s1A}$, $p_{s1B}$);

calculating (25) an average path length ($\overline{l_n}$) for said road segment based on at least the first and second path lengths; and

if the calculated average path length ($\overline{l_n}$) deviates from the stored segment length ($l_n$) of this road segment ($s_n$) by at least a predetermined minimum amount ($\sigma_3$) and/or by no more than a predetermined maximum amount ($\sigma_4$), storing (27) the average path length ($\overline{l_n}$) as an updated stored segment length ($l_n$) of this road segment ($s_n$) in the digital road map (1').

2. The method according to claim 1, **characterized in that** the total path length ($l_r$) travelled by the first or second vehicle ($A_r$) is determined based on at least the updated stored segment length ($l_n$).

3. The method according to claim 1, **characterized in that** the total path length ($l_r$) travelled by a third vehicle ($A_r$) is determined based on at least the updated stored segment length ($l_n$) if position readings ($p_i$) of the third onboard unit ($O_r$) of a third vehicle ($A_r$) can be associated with this road segment ($s_n$).

4. The method according to any one of claims 1 to 3, **characterized in that** the position readings ($p_i$) are transmitted from the onboard units ($O_r$) to a central unit (11), where the digital road map (1') is stored and updated.

5. The method according to claim 4, **characterized in that** the updated digital road map (1') is returned by the central unit (11) to at least one onboard unit ($O_r$).

6. The method according to any one of claims 1 to 5, **characterized in that** the association (18) of the first and second sets ($S_n$) with the road segment ($s_n$) is done by locating the respective nearest road segment ($s_n$).

7. The method according to any one of claims 1 to 5, **characterized in that** the digital road map (1') includes a respective separate road segment ($s_n$) for different driving directions on a road, and that the association (18) takes place by locating the respective nearest road segment ($s_n$) having the same driving direction.

8. The method according to any one of claims 1 to 7, **characterized in that** the mutual distances ($a_i$) are determined directly based on the position readings ($p_i$).

9. The method according to any one of claims 1 to 7, **characterized in that** the onboard units ($O_r$) generate a related pair ($g_i$, $t_i$) comprising a speed ($g_i$) and measuring time ($t_i$) for every position reading ($p_i$), and the mutual distances ($a_i$) of two respective consecutive position readings ($p_i$) of an onboard unit ($O_r$) are determined based on the speed ($g_i$) at the first of the two position readings ($p_i$) and the difference of the measuring times ($t_i$, $t_{i+1}$) of the two position readings ($p_i$, $p_{i+1}$).

10. The method according to any one of claims 1 to 9, **characterized in that** the onboard units ($O_r$) also generate a related position quality index ($q_i$) for each position reading ($p_i$), and only those position readings ($p_i$) are used for determining a path length ($l'_{n,r}$), the position quality index ($q_i$) of which exceeds a predetermined first threshold value ($\sigma_1$).

11. The method according to any one of claims 1 to 10, **characterized in that** a set quality index ($Q_n$) is formed based on a number (A), or on position quality indices ($q_i$), of position readings ($p_i$) of an onboard unit ($O_r$) that can be associated with a road segment ($s_n$), and that a path length ($l'_{n,r}$) is determined based on these position readings ($p_i$), or these readings are used for calculating (25) the average path length ($\overline{l_n}$), only if the set quality index ($Q_n$) exceeds a predetermined second threshold value ($\sigma_2$).

12. The method according to claim 11, **characterized in that** the set quality index ($Q_n$) is determined based on the position quality indices ($q_i$) of the set ($S_n$) as an average thereof, or as a ratio of the number (A) of position readings ($p_i$) that are considered in the set ($S_n$) to the number of considered and not-considered position readings ($p_i$).

13. The method according to any one of claims 1 to 12, **characterized in that** the position readings ($p_i$) are generated by way of a satellite navigation receiver (6) of the onboard unit ($O_r$) by localization in a satellite navigation system (8).

14. The method according to claim 13, **characterized in that** the satellite navigation receiver (6) issues a related DOP value, preferably HDOP value, for each position reading ($p_i$) as a basis for the position quality index ($q_i$) thereof.

15. The method according to any one of claims 1 to 14, **characterized in that** the position quality index ($q_m$) of a position reading ($p_m$) is generated depending on the distance ($\delta_m$) thereof from the located nearest road segment ($s_n$) of the digital road map (1').

16. The method according to any one of claims 1 to 15, **characterized in that** the position quality index ($q_k$, $q_j$, $q_l$) of a position reading ($p_k$, $p_j$, $p_l$) is generated depending on the distance ($\delta_k$, $\delta_j$, $\delta_l$) thereof from an expected value ($l_k$, $l_j$, $l_l$), which is formed for said position reading ($p_k$, $p_j$, $p_l$) by way of interpolation based on neighbouring, or by way of extrapolation based on preceding, position readings ($p_k$, $p_j$, $p_l$).

**Revendications**

1. Procédé pour l'actualisation d'une carte routière numérique (1') représentant un réseau routier (1), dans laquelle sont enregistrés des segments de route ($s_n$) avec des longueurs de segment ($l_n$), comprenant :

l'équipement d'au moins deux véhicules ($A_r$) circulant sur le réseau routier (1) et comportant respectivement au moins une unité de bord ($O_r$) produisant des valeurs de mesure de position ($p_i$) ;
en outre **caractérisé par** les étapes suivantes :

lorsqu'un premier ensemble ($S_n$) de valeurs de mesure de position ($p_i$) d'une première unité de bord ($O_r$) peut être attribué à un segment de route ($s_n$) de la carte routière numérique (1'), détermination (21) d'une première longueur de trajet ($l'_{n,r}$) à partir des écarts réciproques ($a_i$) de valeurs de mesure de position ($p_i$) consécutives du premier ensemble ($S_n$), plus les écarts ($a_A$, $a_B$) de la première et de la dernière valeur de mesure de position ($p_1$, $p_5$) du premier ensemble ($S_n$) par rapport à la limite de segment ($p_{s1A}$, $p_{s1B}$) respectivement voisine ;
lorsqu'un deuxième ensemble ($S_n$) de valeurs de mesure de position ($p_i$) d'une deuxième unité de bord ($O_r$) peut être attribué au même segment de route ($s_n$), détermination (21) d'une deuxième longueur de trajet ($l'_{n,r}$) à partir des écarts réciproques ($a_i$) de valeurs de mesure de position ($p_i$) consécutives du deuxième ensemble ($S_n$), plus les écarts ($a_A$, $a_B$) de la première et de la dernière valeur de mesure de position ($p_1$, $p_5$) du deuxième ensemble ($S_n$) par rapport

à la limite de segment ($p_{s1A}$, $p_{s1B}$) respectivement voisine ;
calcul (25) d'une longueur de trajet moyenne ($\overline{l'_n}$) pour ledit segment de route, à partir d'au moins la première et la deuxième longueur de trajet ; et
lorsque la longueur de trajet moyenne ($\overline{l'_n}$) calculée s'écarte au minimum d'une mesure minimale prédéfinie ($\sigma3$) et/ou au maximum d'une mesure maximale prédéfinie ($\sigma4$) par rapport à la longueur de segment ($l_n$) enregistrée dudit segment de route ($s_n$), enregistrement (27) de la longueur de trajet moyenne ($\overline{l'_n}$) en tant que longueur de segment enregistrée actualisée ($l_n$) de ce segment de route ($s_n$) dans la carte routière numérique (1').

2. Procédé selon la revendication 1, **caractérisé en ce que** la longueur de trajet ($l_r$) totale parcourue par le premier ou le deuxième véhicule ($A_r$) est déterminée au moins à partir de la longueur de segment enregistrée actualisée ($l_n$).

3. Procédé selon la revendication 1, **caractérisé en ce que** lorsque des valeurs de mesure de position ($p_i$) d'une troisième unité de bord ($O_r$) d'un troisième véhicule ($A_r$) peuvent être attribuées audit segment de route ($s_n$), la longueur de trajet ($l_r$) totale parcourue par le troisième véhicule ($A_r$) est déterminée au moins à partir de la longueur de segment enregistrée actualisée ($l_n$).

4. Procédé selon l'une des revendications 1 à 3, **caractérisé en ce que** les valeurs de mesure de position ($p_i$) sont envoyées par les unités de bord ($O_r$) à une centrale (11) dans laquelle la carte routière numérique (1') est enregistrée et actualisée.

5. Procédé selon la revendication 4, **caractérisé en ce que** la carte routière numérique (1') actualisée est renvoyée par la centrale (11) à au moins une unité de bord ($O_r$).

6. Procédé selon l'une des revendications 1 à 5, **caractérisé en ce que** l'attribution (18) du premier et du deuxième ensemble ($S_n$) au segment de route ($s_n$) est effectuée par la détection du segment de route ($s_n$) respectivement le plus proche.

7. Procédé selon l'une des revendications 1 à 5, **caractérisé en ce que** la carte routière numérique (1') contient respectivement un segment de route ($s_n$) particulier pour différentes directions de circulation sur une route, et l'attribution (18) est effectuée en détectant le segment de route ($s_n$) respectivement le plus proche avec la même direction de circulation.

**8.** Procédé selon l'une des revendications 1 à 7, **caractérisé en ce que** les écarts réciproques ($a_i$) sont déterminés à partir des valeurs de mesure de position ($p_i$) elles-mêmes.

**9.** Procédé selon l'une des revendications 1 à 7, **caractérisé en ce que** pour chaque valeur de mesure de position ($p_i$), les unités de bord ($O_r$) produisent une paire correspondante ($g_i$, $t_i$) de vitesse ($g_i$) et d'instant de mesure ($t_i$), et **en ce que** les écarts réciproques ($a_i$) entre deux valeurs de mesure de position ($p_i$) consécutives d'une unité de bord ($O_r$) sont respectivement déterminés à partir de la vitesse ($g_i$) à la première des deux valeurs de mesure de position ($p_i$) et de la différence entre les instants de mesure ($t_i$, $t_{i+1}$) des deux valeurs de mesure de position ($p_i$, $p_{i+1}$).

**10.** Procédé selon l'une des revendications 1 à 9, **caractérisé en ce que** pour chaque valeur de mesure de position ($p_i$), les unités de bord ($O_r$) produisent également une mesure de qualité de position ($q_i$) correspondante, et **en ce que** pour la détermination d'une longueur de trajet ($l'_{n,r}$), seule les valeurs de mesure de position ($p_i$) dont la mesure de qualité de position ($q_i$) dépasse une première valeur seuil prédéfinie ($\sigma_1$) sont utilisées.

**11.** Procédé selon l'une des revendications 1 à 10, **caractérisé en ce qu'**une mesure de qualité d'ensemble ($Q_n$) est formée à l'aide du nombre (A) ou des mesures de qualité de position ($q_i$) des valeurs de mesure de position ($p_i$) d'une unité de bord ($O_r$) qui sont attribuables à un segment de route ($s_n$), et **en ce qu'**à partir de ces valeurs de mesure de position ($p_i$), une longueur de trajet ($l'_{n,r}$) n'est déterminée ou utilisée pour le calcul (25) de la longueur de trajet moyenne ($\overline{l'_n}$) que lorsque la mesure de qualité d'ensemble ($Q_n$) dépasse une deuxième valeur seuil prédéfinie ($\sigma_2$).

**12.** Procédé selon la revendication 11, **caractérisé en ce que** la mesure de qualité d'ensemble ($Q_n$) est déterminée à partir des mesures de qualité de position ($q_i$) de l'ensemble ($S_n$) en tant que moyenne de celles-ci ou en tant que rapport entre les nombres (A) de valeurs de mesure de position ($p_i$) prises en compte dans l'ensemble ($S_n$) et la somme des valeurs de mesure de position ($p_i$) prises en compte et non prises en compte.

**13.** Procédé selon l'une des revendications 1 à 12, **caractérisé en ce que** les valeurs de mesure de position ($p_i$) sont produites par localisation dans un système de navigation par satellite (8) au moyen d'un récepteur de navigation satellite (6) de l'unité de bord ($O_r$).

**14.** Procédé selon la revendication 13, **caractérisé en ce que** pour chaque valeur de mesure de position ($p_i$), le récepteur de navigation par satellite (6) émet une valeur DOP correspondante, de préférence une valeur HDOP, comme base pour la mesure de qualité de position ($q_i$) de celle-ci.

**15.** Procédé selon l'une des revendications 1 à 14, **caractérisé en ce que** la mesure de qualité de position ($q_m$) d'une valeur de mesure de position ($p_m$) est produite en fonction de l'écart ($\delta_m$) entre celle-ci et le segment de route ($s_n$) le plus proche détecté de la carte routière numérique (1').

**16.** Procédé selon l'une des revendications 1 à 15, **caractérisé en ce que** la mesure de qualité de position ($q_k$, $q_j$, $q_l$) d'une valeur de mesure de position ($p_k$, $p_j$, $p_l$) est produite en fonction de l'écart ($\delta_k$, $\delta_j$, $\delta_l$) entre celle-ci et une valeur attendue ($l_k$, $l_j$, $l_l$), laquelle est formée pour ladite valeur de mesure de position ($p_k$, $p_j$, $p_l$) par interpolation à partir de valeurs de mesure de position ($p_k$, $p_j$, $p_l$) voisines, ou par extrapolation à partir de valeurs de mesure de position précédentes.

**Fig. 1**

**Fig. 2**

*Fig. 3*

*Fig. 5*

match & extr($\sigma_1$)    18

{$p_i$}    24

{$q_i$}

1'

{$q_i$}$_n$    $S_n$

calc $Q_n$    19

$Q_n$    $S_n$

20

n    $Q_n > \sigma_2$?    y

21

calc l'$_n$($S_n$)    23    l'$_{n,r}$

*Fig. 4a*

$$I'_{n,1}$$

$$I'_{n,2}$$ 23

$$I'_{n,3}$$

$$\vdots$$

$$I'_{n,r}$$

$$\vdots$$

rcv $I'_{n,r}$ — 22

calc $\overline{I'_n}$ — 25

$\sigma_3 < \overline{I'_n} - I_n < \sigma_4$ ? — 26

n ... y

$I_n := \overline{I'_n}$ — 27

*Fig. 4b*

*Fig. 6*

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10030932 A1